# EUROPEAN PATENT APPLICATION

(11) **EP 1 429 550 A2**
(43) Date of publication of application: **16.06.2004**
(21) Application number: 03027399.9
(22) Date of filing: 27.11.2003
(51) Int. Cl.: H04N 5/45

(54) **Compositing MPEG video streams for combined image display**

(30) Priority: 10.12.2002 US 315616
(71) Applicant: MICROSOFT CORPORATION, Redmond, Washington 98052-6399 (US)
(72) Inventor: Baldwin, James Armand, Redwood City California 94062 (US); Barrett, Peter T., San Francisco California 94117 (US)
(74) Representative: Grünecker, Kinkeldey, Stockmair & Schwanhäusser Anwaltssozietät

(57) **Abstract**

In an implementation, a first MPEG video stream is selected from a broadcast channel and the MPEG video stream is decoded to generate a first image for display. A second MPEG video stream is selected from the broadcast channel and decoded to generate a second image for display such that the second image is combined for display with at least a section of the first image.

## Description

### TECHNICAL FIELD

This invention relates to MPEG data processing and, in particular, to compositing MPEG video streams for combined image display.

### BACKGROUND

A limited resource client device in a television-based system, such as a set-top box with a single tuner, can receive video content as MPEG data that is decoded to generate a video for display. A client device with a single tuner can not generate multiple MPEG video streams for a simultaneous display of two or more videos, such as picture-in-picture. This can limit the presentation of entertainment programming and information to a viewer.

Accordingly, for a limited resource client device, there is a need to be able to generate multiple MPEG video streams that can be combined by the client device for display.

### SUMMARY

Compositing MPEG video streams for combined image display is described herein.

In an implementation, a first MPEG video stream is selected from a broadcast channel and the MPEG video stream is decoded to generate a first image for display. A second MPEG video stream is selected from the broadcast channel and decoded to generate a second image for display such that the second image is combined for display with at least a section of the first image. For example, the second image can be displayed as a video within the first image.

In one implementation, MPEG data is generated corresponding to Web pages. An MPEG video stream of the MPEG data is decoded to reproduce a Web page for display. A second MPEG video stream of MPEG data can be selected and decoded to generate a second Web page for display. The second Web page can be displayed concurrently with the first Web page. Alternatively, an MPEG video can be generated for display within the first Web page.

### BRIEF DESCRIPTION OF THE DRAWINGS

The same numbers are used throughout the drawings to reference like features and components.

Fig. 1 illustrates various components of an exemplary system to implement compositing MPEG video streams for combined image display.

Fig. 2 illustrates a first broadcast channel that includes multiple MPEG video streams.

Fig. 3 illustrates a second broadcast channel that includes multiple MPEG video streams.

Fig. 4 illustrates an example of compositing MPEG video streams for combined image display.

Fig. 5 further illustrates the example of compositing MPEG video streams shown in Fig. 4.

Fig. 6 illustrates an example of generating an independent P_{I}-frame from an MPEG I-frame.

Fig. 7 illustrates an example of Web pages being reproduced with MPEG data.

Fig. 8 is a flow diagram that illustrates an exemplary method for generating independent P_{I}-frames from MPEG I-frames.

Fig. 9 is a flow diagram that illustrates an exemplary method for compositing MPEG video streams for combined image display.

Fig. 10 is a flow diagram that illustrates an exemplary method for reproducing Web pages with MPEG data.

Fig. 11 illustrates various components of an exemplary client device implemented in a television-based system.

Fig. 12 illustrates an exemplary system architecture in which compositing MPEG video streams for combined image display can be implemented.

### DETAILED DESCRIPTION

Compositing MPEG video streams for combined image display is described in one implementation as a limited resource digital set-top box that can generate and combine multiple MPEG video streams for composite display effects by selecting among multiple, specifically-encoded MPEG video streams. In one implementation, a first MPEG video stream is selected by a transport demultiplexer and communicated to an MPEG decoder that decodes the video stream to generate a first image for display, such as a static page. A second MPEG video stream is then selected by the transport demultiplexer and composited with the first MPEG video stream. The MPEG decoder then continues to receive the second MPEG video stream just as if the decoder were receiving one valid MPEG video stream (i.e., the first MPEG video stream and then the second MPEG video stream). The second MPEG video stream is decoded to generate a second image for display, such as a video that is displayed within the first image.

The following discussion is directed to television-based entertainment and information systems, such as interactive television networks, cable networks, and Web-enabled television networks. Client devices in such systems range from full-resource clients with substantial memory and processing resources, such as television-enabled personal computers and television recorders equipped with hard-disks, to low-resource clients with limited memory and/or processing resources, such as traditional set-top boxes. While aspects of the described systems and methods can be used in any of these systems and for any types of client devices, they are described in the context of the following exemplary environment.

### Exemplary System to Composite MPEG Video Streams

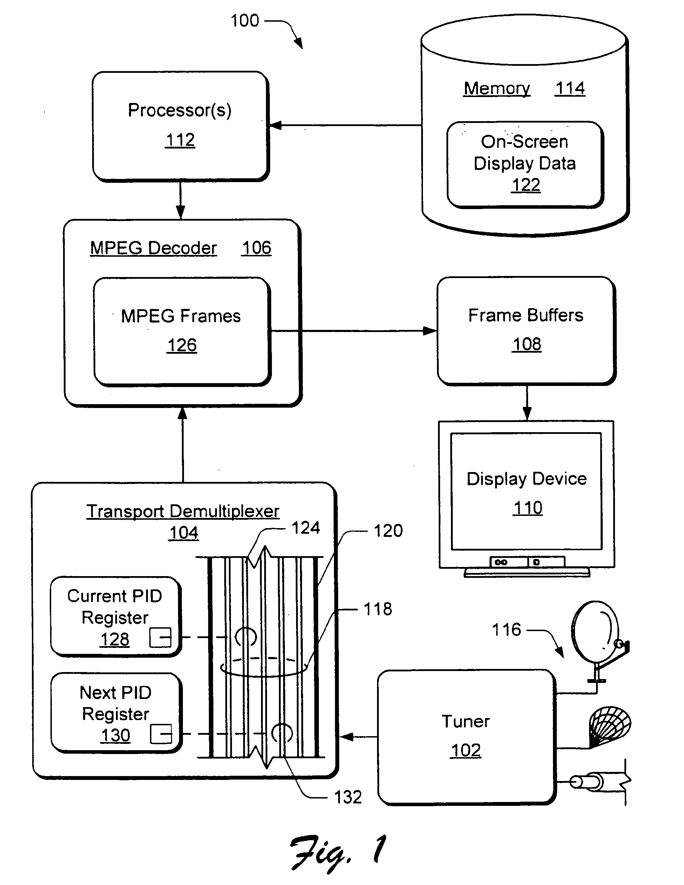

Fig. 1 illustrates various components of an exemplary MPEG data processing and image generation system 100 to implement compositing MPEG video streams for combined image display. System 100 includes a tuner 102, a transport demultiplexer 104, and an MPEG decoder 106. System 100 also includes frame buffers 108, a display device 110, one or more processors 112, and a memory device 114. The illustrated components of system 100 can be implemented in any number of television-based client devices, such as a set-top box, a satellite receiver, a TV recorder with a hard disk, a digital video recorder (DVR) and playback system, a personal video recorder (PVR) and playback system, a game console, an information appliance, and so forth.

Tuner 102 receives broadcast MPEG data via various transmission media 116, such as satellite transmission, radio frequency transmission, cable transmission, and/or via any number of other transmission media. The MPEG data is received as multiple MPEG video streams 118 in a broadcast channel 120 which can be implemented as a quadrature amplitude modulated (QAM) channel. A single QAM transport channel can include several digital MPEG video streams 118 as well as associated metadata which is stored as on-screen display data 122 in memory device 114. Tuner 102 receives broadcast channel 120 and communicates the broadcast channel with the multiple MPEG video streams 118 to the transport demultiplexer 104.

In this example, each MPEG video stream 118 includes MPEG data that represents a video image or a static image, such as a Web page that has been reproduced with MPEG data. A first MPEG video stream 124 is selected by transport demultiplexer 104 and communicated to MPEG decoder 106 where the MPEG video stream is decoded to generate an image for display. The MPEG decoder 106 decodes the MPEG video stream to generate MPEG frames 126 that are stored in frame buffers 108 for display on display device 110.

Transport demultiplexer 104 includes a current packet identifier (PID) register 128 and a next PID register 130. A current MPEG video stream identifier is stored, and/or otherwise maintained, in the current PID register 128. The current MPEG video stream identifier can be a packet identifier corresponding to data packets in the first MPEG video stream 124 that is currently being decoded with MPEG decoder 106. A next MPEG video stream identifier is stored, and/or otherwise maintained, in the next PID register 130 when a display change selection is received.

A display change selection can be an auto-generated instruction initiated within a client device, or can be received as a viewer input from a viewer-operated remote control device, for example. A next MPEG video stream identifier can be a packet identifier corresponding to data packets in a second MPEG video stream 132. The next MPEG video stream identifier indicates the next MPEG video stream that transport demultiplexer 104 will select to communicate to MPEG decoder 106. The second MPEG video stream 132 includes MPEG data that represents a digital video or a static image, such as another Web page, which corresponds to the display change selection.

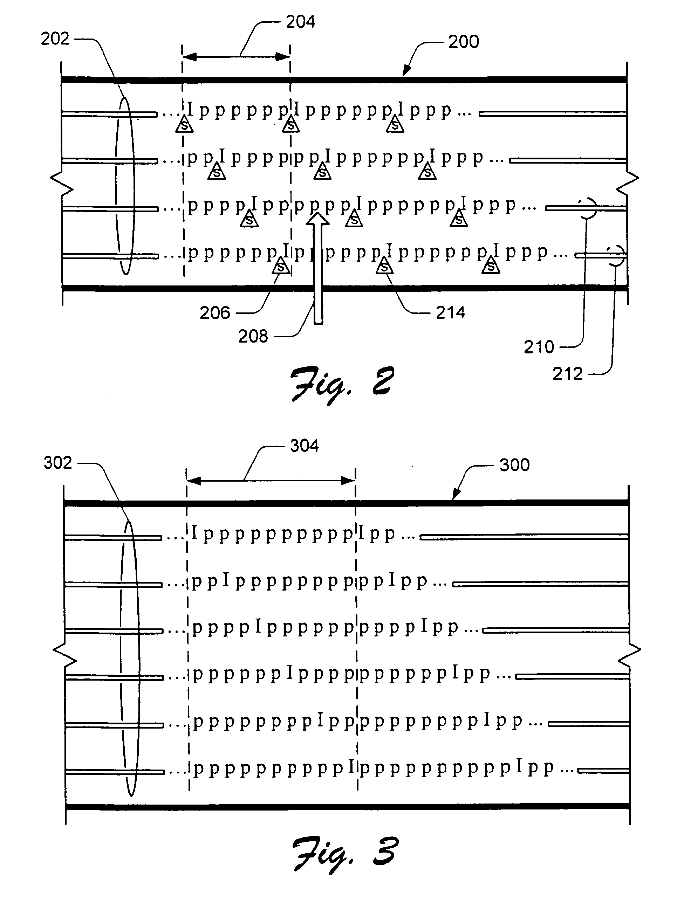

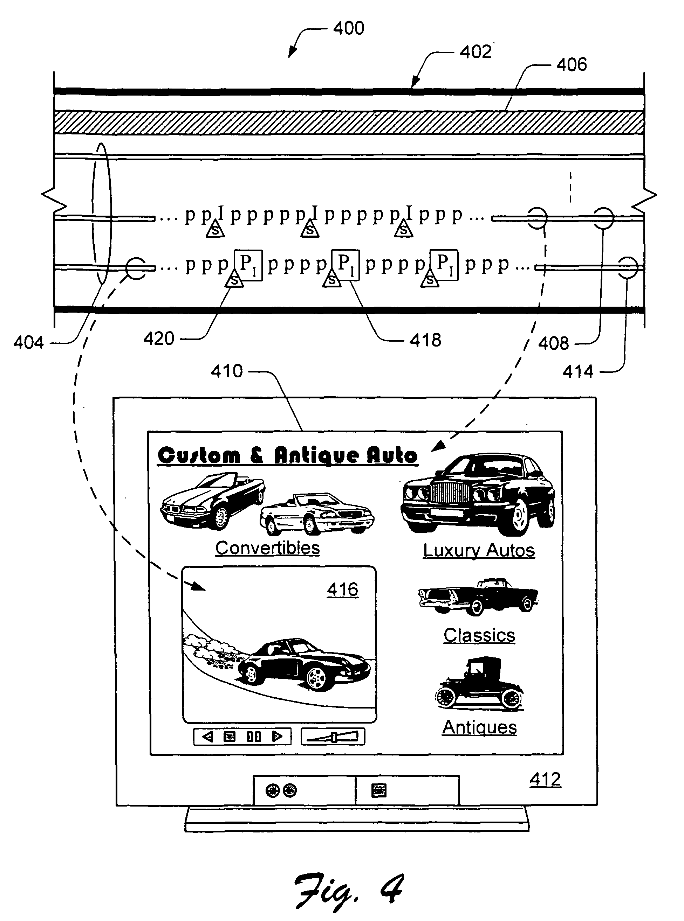

Fig. 2 illustrates a broadcast channel 200 that includes multiple MPEG video streams 202. In this example, the MPEG video streams include I-frames and P-frames that are the MPEG data which represents a digital video or a static image, such as a Web page for example. The MPEG I-frames (intra frames) are each coded as a stand-alone still image and the MPEG P-frames (predicted frames) are each coded relative to the nearest previous I-frame or P-frame for forward prediction processing. The MPEG data streams 202 may also include B-frames (bi-directional frames) which each use the closest past and future I-frame or P-frame as a reference for bi-directional prediction.

The MPEG frames are divided into 16 x 16 macroblocks for encoding. Macroblocks in the P-frames can be encoded as directly displayable pixel values, or as a delta (e.g., prediction) that is applied to a 16 x 16 macroblock region from a previously decoded frame. The resultant of a prediction from a previously decoded frame is designated by a two-dimensional motion vector that is encoded with a macroblock. A motion vector of (0,0) in a macroblock refers to a 16 x 16 region in the same position of a previous frame.

Each of the MPEG video streams 202 include MPEG data that represents a static image, such as Web page that has been reproduced with MPEG data. Each MPEG I-frame is a stand-alone still image of a Web page and an I-frame corresponding to a particular Web page is periodically repeated within each respective MPEG video stream. Because the Web pages are static, the P-frames include null macroblocks with a motion vector of zero (0,0) and a delta value of zero because the display is not updated as with a moving display in a video.

The example broadcast channel 200 has four MPEG video streams 202 and the I-frames in each video stream are repeated as frequently as possible depending upon the number of Web pages (e.g., video streams) and the available bandwidth of broadcast channel 200. The periodic frequency for repeating I-frames in the respective video streams is denoted by a time 204. An I-frame corresponding to each Web page is transmitted every time 204 across all of the MPEG video streams 202.

Additionally, each MPEG I-frame is designated with a splice point 206 to facilitate switching from one MPEG video stream to another. A splice point 206 defines a convenient point to splice into an MPEG video stream so that it does not appear on the display as if a picture is being rendered in the middle of a transmission, or broadcast. Each of the I-frame splice points 206 provide a point for random access when cross selecting into an MPEG video stream.

For example, if a display change selection 208 is received at a point in MPEG video stream 210, and the display change selection corresponds to MPEG video stream 212, a next MPEG video stream identifier for video stream 212 is stored in the next PID register 130 (Fig. 1). Transport demultiplexer 104 then monitors the next MPEG video stream 212 for a next splice point 214. The transport demultiplexer 104 then selects the MPEG video stream 212 at the splice point to communicate the video stream to the MPEG decoder 106. This provides a smooth transition between MPEG video streams 210 and 212 and prevents the "waterfall effect" of having the display go black and then fill in pixel-by-pixel as the data is received for decoding when changing mid-stream rather than at a stand-alone MPEG I-frame.

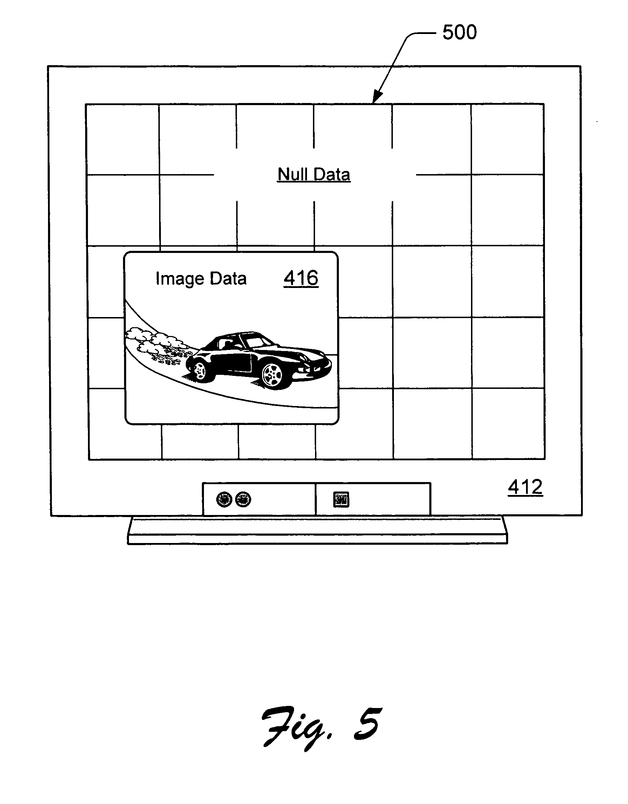

Fig. 3 illustrates a broadcast channel 300 that includes multiple MPEG video streams 302. The example broadcast channel 300 has six MPEG video streams 302 and, as described above with reference to example broadcast channel 200 (Fig. 2), the MPEG I-frames in each video stream are repeated as frequently as possible. The periodic frequency for repeating I-frames in the respective MPEG video streams 302 is denoted by a time 304 to indicate that an I-frame corresponding to a static image is transmitted every time 304 across all of the MPEG video streams 302. Although not shown in Fig. 3, each I-frame is also designated as a splice point to facilitate switching from one MPEG video stream to another.

The time 204 (Fig. 2) for repeating I-frames in MPEG video streams 202 is less than time 304 (Fig. 3) for repeating I-frames in MPEG video streams 302 because if there are fewer video streams in a broadcast channel, then the I-frames in each of the video streams can be repeated more often. Thus, the time to switch from one MPEG video stream to another is reduced because a splice point at an I-frame will occur sooner (e.g., time 204) than when the I-frames are repeated less frequently (e.g., time 304). Accordingly, the time between display changes can be controlled by the bandwidth allocation for MPEG video streams in a broadcast channel.

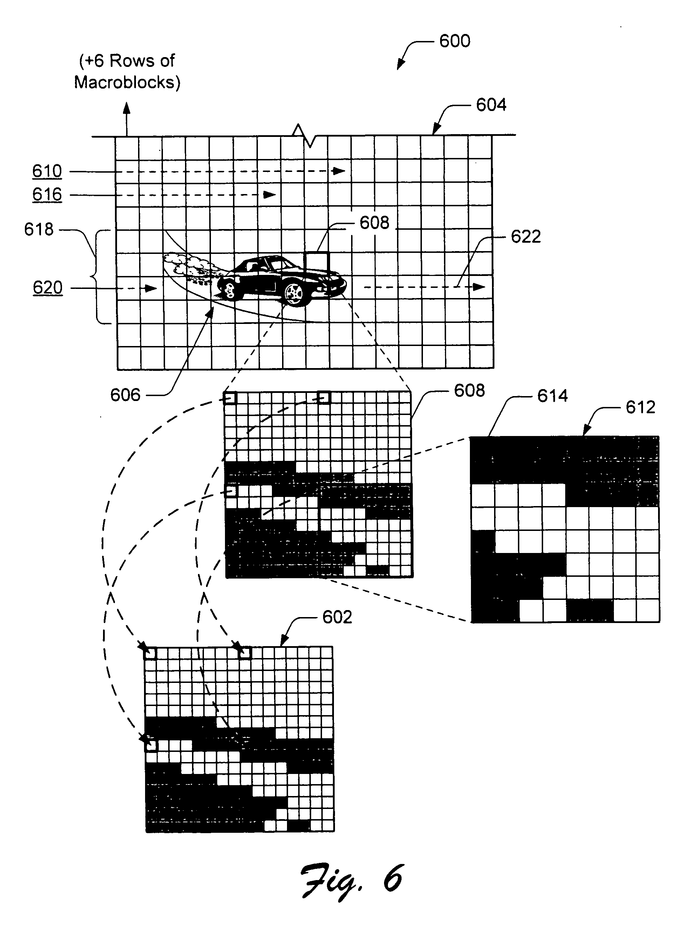

Fig. 4 illustrates an example 400 of compositing MPEG video streams for combined image display. A broadcast channel 402 includes any number of MPEG video streams 404 and associated metadata 406. A first MPEG video stream 408 includes I-frames and P-frames that are the MPEG data which is decoded to generate a static image 410 for display on display device 412. When the transport demultiplexer 104 (Fig. 1) selects a second MPEG video stream 414, the video stream is communicated to MPEG decoder 106 and the MPEG data in the video stream 414 is decoded to generate a video 416 for display within static image 410.

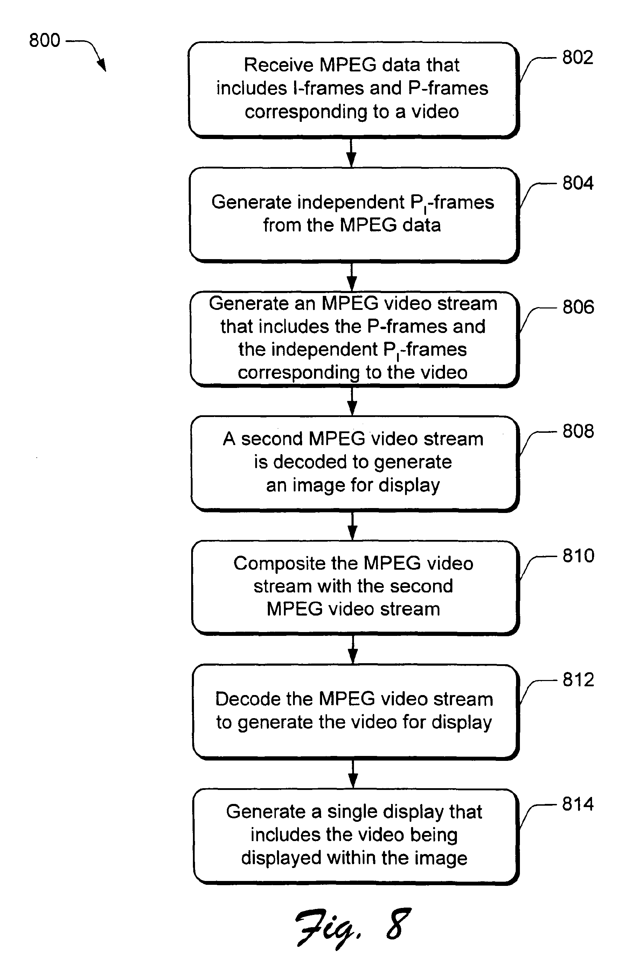

The MPEG video stream 414 is composed of P-frames, some of which are independent P_{I}-frames 418. Each independent P_{I}-frame 418 in MPEG video stream 414 is also a designated splice point 420 to provide a smooth transition when switching from one MPEG video stream to another. An independent P_{I}-frame 418 is a stand-alone MPEG frame composed of I-macroblocks and is generated from an MPEG I-frame. A process to generate independent P_{I}-frames from MPEG I-frames is described below with reference to Figs. 6 and 8.

To display a static image 410, such as a Web page, with a video 416 being displayed within the Web page, the MPEG decoder 106 (Fig. 1) receives one valid MPEG video stream that is two MPEG video streams composited by the selection of the video streams in the transport demultiplexer 104. The first MPEG video stream 408 includes MPEG I-frames and is decoded first to generate the static image 410. When the transport demultiplexer 104 switches into the second MPEG video stream 414, the MPEG decoder 106 continues to receive P-frames (some of which are the independent P_{I}-frames) just as if the MPEG decoder 106 were receiving one valid MPEG video stream.

Because the MPEG decoder does not recognize a change in the video stream source when the transport demultiplexer 104 switches from MPEG video stream 408 to MPEG video stream 414, the MPEG decoder 106 does not stop processing the first video stream and then monitor the second video stream for an I-frame to begin decoding the second video stream. Further, the MPEG decoder 106 does not clear it's reference image buffers before switching to MPEG video stream 414. The video display 416 generated with the P-frames in the second MPEG video stream 414 relies on the I-frames in the first MPEG video stream 408 which are decoded to generate the static image 410.

In this example, the P-frames and independent P_{I}-frames in MPEG video stream 414 are encoded such that the video 416 is comprised of 16 x 16 macroblocks that form a 160 x 128 video window. The remaining 16 x 16 macroblocks that form the rest of the 720 x 480 Web page display 410 outside of the video region are null macroblocks. Thus, when the second MPEG video stream 414 is decoded, only the display within the 160 x 128 video window changes. The remaining section of the 720 x 480 Web page 410 is unchanged and continues to be displayed while the video is also being displayed.

Fig. 5 further illustrates the example 400 (Fig. 4) of compositing MPEG video streams 408 and 414 to generate a video 416 for display within a static image, such as a Web page. When the second MPEG video stream 414 is selected and decoded, the display 500 is generated. Image data is decoded to generate video 416 while the region outside of the video window is null data and does not change. Thus, the section of static image 410 (Fig. 4) outside of the video 416 does not change while the video is displayed within the static image.

A client device in a television-based system that includes components for compositing MPEG video streams can decode and create a composited display that is a combination of any number of concurrently broadcast MPEG video streams. The client device can compose a display that includes a Web page with a video being displayed within the Web page as shown in Fig. 4, and/or compose the display to include any number and types of banner advertisements, windows, videos, images, and the like. The client device can initiate that transport demultiplexer 104 (Fig. 1) repeatedly update the current PID register 128 and the next PID register 130 to switch between MPEG video streams in a sequence to generate a combined image display.

Fig. 6 illustrates an example 600 of generating an I-macroblock 602 that is one of multiple macroblocks that are encoded to form an MPEG independent P_{I}-frame from an MPEG I-frame 604. The I-frame 604 represents one still image 606 of the video 416 (Figs. 4-5) and is composed of a 16 x 16 array of macroblocks (only 16 x 10 macroblocks are shown), such as macroblock 608. A macroblock row is a slice 610 which can be one or more macroblocks in a row from left to right. The MPEG-2 specification requires that every row begin a new slice, however a row can be defined by as many slices as there are macroblocks in the row (i.e., sixteen macroblocks).

Each macroblock in I-frame 604, such as macroblock 608, is sixteen samples by sixteen lines which are an array of pixels that together define four blocks. A block 612 of the macroblock 608 is eight samples by eight lines and includes a discrete cosine (DC) coefficient 614 that indicates the amount of a particular horizontal or vertical frequency within the block 612.

An independent P_{I}-frame is a stand-alone MPEG frame composed of I-macroblocks, such as the independent P_{I}-frames 418 (Fig. 4) that are generated as MPEG video stream 414 to display the video 416. The data that defines the I-frame macroblock 608 is copied and re-encoded to generate the independent P_{I}-frame macroblock 602. For the region above and below still image 606 of the video 416 (Fig. 5) that is null data and which does not change, slices of null macroblocks (e.g., having a motion vector of (0,0) and all pixel data zero) are encoded. For example, slice 610 is a row of sixteen null macroblocks above still image 606 of the video 416, and slice 610 is followed by slice 616 and so on.

For the macroblock rows 618 that include macroblocks having image 606 pixel data, a null slice 620 (two null macroblocks in this example) is inserted before the pixel data macroblocks for image 606 and a null slice 622 (six null macroblocks in this example) are inserted after the pixel data macroblocks to position the image 606 horizontally in the I-frame 604. If the pixel data macroblocks for an image start in the first column of macroblocks in an I-frame, then a null slice is not needed before the pixel data macroblocks. Similarly, if the pixel data macroblocks for an image end in the last column of macroblocks in an I-frame, then a null slice is not needed after the pixel data macroblocks.

For source image data that is encoded as a P-frame, slices of null macroblocks (e.g., having a motion vector of (0,0) and all pixel data zero) are inserted into a target stream to position a smaller source stream (e.g., video 416) at a particular location within a target stream (e.g., static image 410). A single null slice row is created for every row in the target stream above and/or below the smaller image 606 as described above. For rows of the target stream that contain source image data, a null slice is inserted before and/or after the source image data to position the smaller image 606 horizontally within the target stream.

The slice data start codes that indicate the vertical position of the slices in the P-frame are re-encoded and the remaining slice data is copied as is. Because a slice start code indicates the vertical position of a particular slice, only the slice start code is modified to alter the vertical position of the particular slice. For example, a sequence of four consecutive bytes in the range 0x00000101 through 0x000001af are all slice start codes where the last byte indicates the (one-based) row number where the slice is to be positioned.

For source image data that is encoded as I-macroblocks in an I-frame, slices of null macroblocks (e.g., having a motion vector of (0,0) and all pixel data zero) are inserted into a target stream to position a smaller source stream (e.g., video 416) at a particular location within a target stream (e.g., static image 410). A single null slice row is created for every row in the target stream above and/or below the smaller image 606 as described above. For rows of the target stream that contain source image data, a null slice is inserted before and/or after the source image data to position the smaller image 606 horizontally within the target stream.

The first DC coefficient in each block of pixel data is re-encoded because different tables are used for DC coefficients between P-frames and I-frames. Further, every symbol in a macroblock slice is parsed and re-encoded to replace the encoding for DC coefficients. In addition to re-encoding the first DC coefficient in each block, the encoded material for a slice is copied to convert the compressed data in a slice of macroblocks of an I-frame to an equivalent compressed slice in an independent P_{I}-frame.

A resultant MPEG independent P_{I}-frame contains encoded pixel data for image 606 of the video 416. The MPEG video stream 414 is a series of independent P_{I}-frames and P-frames having encoded pixel data that positions the video 416 within the null data of a complete picture or video frame.

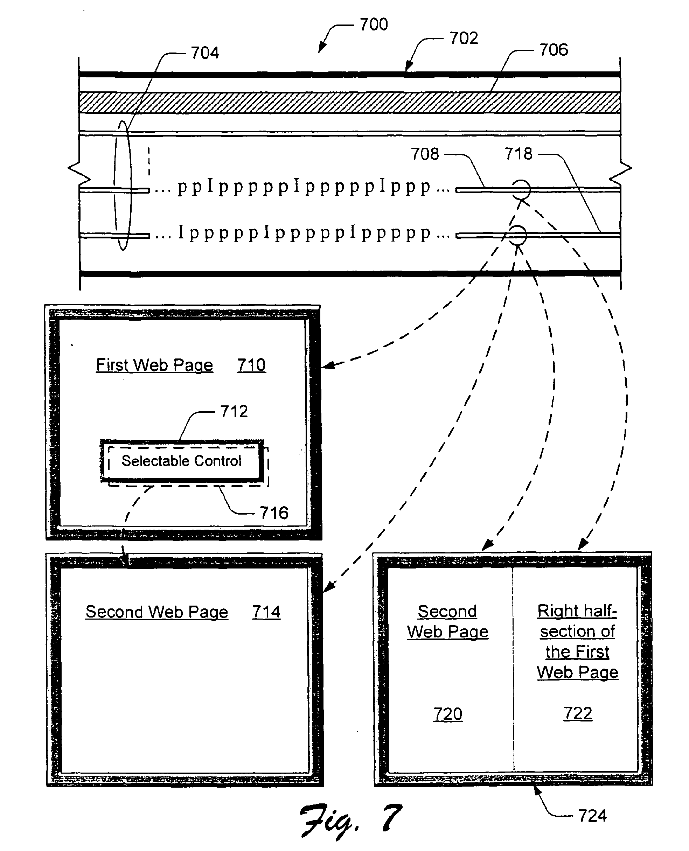

Fig. 7 illustrates an example 700 of Web pages being reproduced with MPEG data. A broadcast channel 702 includes multiple MPEG video streams 704 that each include MPEG data generated from Web pages. Broadcast channel 702 also includes metadata 706 associated with the Web pages, such as on-screen display data that corresponds to selectable controls, links to additional pages, and the like. A first MPEG video stream 708 can be decoded to reproduce a first Web page 710 on a display device. Web page 710 includes a selectable control 712 that, when selected, initiates navigating to a second Web page 714. A focus 716, such as a box or a hi-lite, can be generated as an on-screen display for user input. A user can initiate a display change selection from the first Web page 710 to the second Web page 714 with the on-screen display focus 716 displayed over Web page 710.

When the display change selection is initiated, the transport demultiplexer 104 (Fig. 1) selects a second MPEG video stream 718 which is decoded to reproduce the second Web page 714 on a display device. Alternatively, a second Web page 720 can be displayed with a section of the first Web page 722 as shown in display 724. Any number of display configurations can be composed with two or more Web pages, video displays, and the like.

### Methods for Compositing MPEG Video Streams

Methods for compositing MPEG video streams for combined image display may be described in the general context of computer-executable instructions. Generally, computer-executable instructions include routines, programs, objects, components, data structures, and the like that perform particular functions or implement particular abstract data types. The described methods may also be practiced in distributed computing environments where functions are performed by remote processing devices that are linked through a communications network. In a distributed computing environment, computer-executable instructions may be located in both local and remote computer storage media, including memory storage devices.

Fig. 8 illustrates a method 800 to generate independent P_{I}-frames with I-macroblocks from MPEG I-frames and P-frames. The order in which the method is described is not intended to be construed as a limitation, and any number of the described method blocks can be combined in any order to implement the method. Furthermore, the method can be implemented in any suitable hardware, software, firmware, or combination thereof.

At block 802, MPEG data is received that includes I-frames and P-frames corresponding to a video. At block 804, independent P_{I}-frames are generated from the MPEG data. Generating the independent P_{I}-frames includes generating slices (e.g., slices 610, 620, and 622 shown in Fig. 6 for example) of null macroblocks to represent a region that does not include pixel data corresponding to the video 416 (Fig. 4). Further, slice data start codes are re-encoded for slices of macroblocks that include the pixel data 606 corresponding to the video 416, and/or the first discrete cosine coefficient 614 is re-encoded in blocks (e.g., block 612) that include the pixel data 606 corresponding to the video 416.

At block 806, an MPEG video stream is generated that includes the P-frames and independent P_{I}-frames corresponding to the video. For example, MPEG video stream 414 (Fig. 4) includes independent P_{I}-frames 418 and P-frames corresponding to video 416.

At block 808, a second MPEG video stream is decoded to generate an image for display. At block 810, the MPEG video stream is composited with the second MPEG video stream. For example, transport demultiplexer 104 (Fig. 1) composites MPEG video stream 414 with MPEG video stream 408 and continues communicating the MPEG data to MPEG decoder 106. The MPEG decoder 106 receives the composited MPEG video stream (i.e., video stream 408 and then video stream 414) just as if the MPEG decoder 106 were receiving one valid MPEG video stream.

At block 812, the MPEG video stream is decoded to generate the video for display. At block 814, a single display is generated that includes the video being displayed within the image. For example, a video 416 (Fig. 4) is generated for display within the image 410.

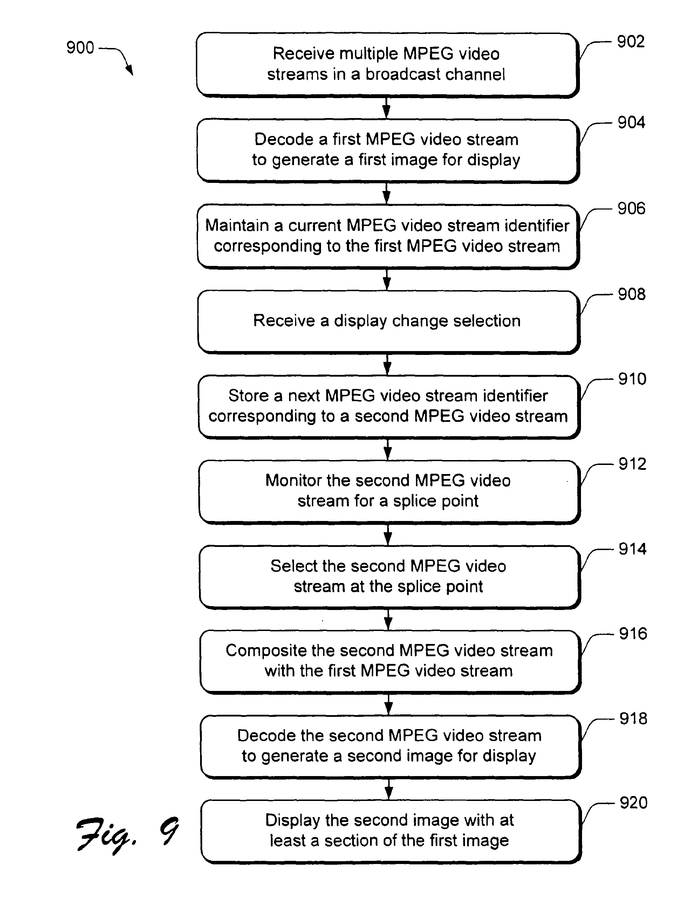

Fig. 9 illustrates a method 900 to composite MPEG video streams. The order in which the method is described is not intended to be construed as a limitation, and any number of the described method blocks can be combined in any order to implement the method. Furthermore, the method can be implemented in any suitable hardware, software, firmware, or combination thereof.

At block 902, multiple MPEG video streams are received in a broadcast channel. For example, multiple MPEG video streams 118 (Fig. 1) are received in broadcast channel 120 with tuner 102. The broadcast channel 120 is communicated from tuner 102 to the transport demultiplexer 104.

At block 904, a first MPEG video stream is decoded to generate a first image for display. Decoding the MPEG video stream can include generating a static page as the first image for display, or generating a Web page as the first image for display. For example, Web page 410 (Fig. 4) is generated from a first MPEG video stream 408.

At block 906, a current MPEG video stream identifier corresponding to the first MPEG video stream is maintained. The MPEG video stream identifier can be a packet identifier corresponding to data packets in the first MPEG video stream. For example, the current packet identifier (PID) register 128 (Fig. 1) maintains a packet identifier corresponding to MPEG video stream 408 (Fig. 4).

At block 908, a display change selection is received. For example, the display change selection can be initiated as a selectable control input with an on-screen display selectable control 712 (Fig. 7) displayed over the Web page 710. Alternatively, the display change selection can be auto-generated as a function of the first image being generated for display.

At block 910, a next MPEG video stream identifier corresponding to a second MPEG video stream is stored. The MPEG video stream identifier can be a packet identifier corresponding to additional data packets in the second MPEG video stream. For example, the next packet identifier (PID) register 130 (Fig. 1) maintains a packet identifier corresponding to MPEG video stream 414. The next MPEG video stream identifier is stored in response to receiving the display change selection which corresponds to the second MPEG video stream.

At block 912, the second MPEG video stream is monitored for a splice point. For example, transport demultiplexer 104 (Fig. 1) monitors the second (e.g., next) MPEG video stream 414 (Fig. 4) for a splice point, such as splice point 420.

At block 914, the second MPEG video stream is selected at the splice point in the video stream. For example, when transport demultiplexer 104 (Fig. 1) determines a splice point in the designated next MPEG video stream 414 (e.g., designated by the next packet identifier stored in the next PID register 130), the transport demultiplexer 104 communicates the next MPEG video stream 414 to the MPEG decoder 106.

At block 916, the second MPEG video stream is composited with the first MPEG video stream. For example, transport demultiplexer 104 (Fig. 1) selects the next MPEG video stream 414 and continues communicating the MPEG data to MPEG decoder 106. The MPEG decoder 106 receives the composited MPEG video stream (i.e., video stream 408 and then video stream 414) just as if the MPEG decoder 106 were receiving one valid MPEG video stream.

At block 918, the second MPEG video stream is decoded to generate a second image for display. The second MPEG video stream can be decoded to generate (depending on the content of the MPEG data) a second static page, a video, or a Web page as the second image for display. For example, a video 416 (Fig. 4) is generated for display within Web page 410.

At block 920, the second image is displayed with at least a section of the first image. The second image and the section of the first image can be displayed concurrently. For example, video 416 (Fig. 4) is displayed concurrently with a section (e.g., the remaining viewable portion) of the first image 410. Alternatively, the first image and the second image can be displayed concurrently and/or side-by-side. Further, the second image can be displayed within the first image, such as video 416.

Method 900 can be repeated (blocks 908-920) for any number of selected, or otherwise designated, MPEG video streams. For example, a third MPEG video stream can be selected, composited with the second MPEG video stream, and decoded to generate a third image for display such that the third image is combined for display with the second image and with at least a second section of the first image. For example, a single display can include a full-screen Web page and two video images being displayed concurrently within the Web page.

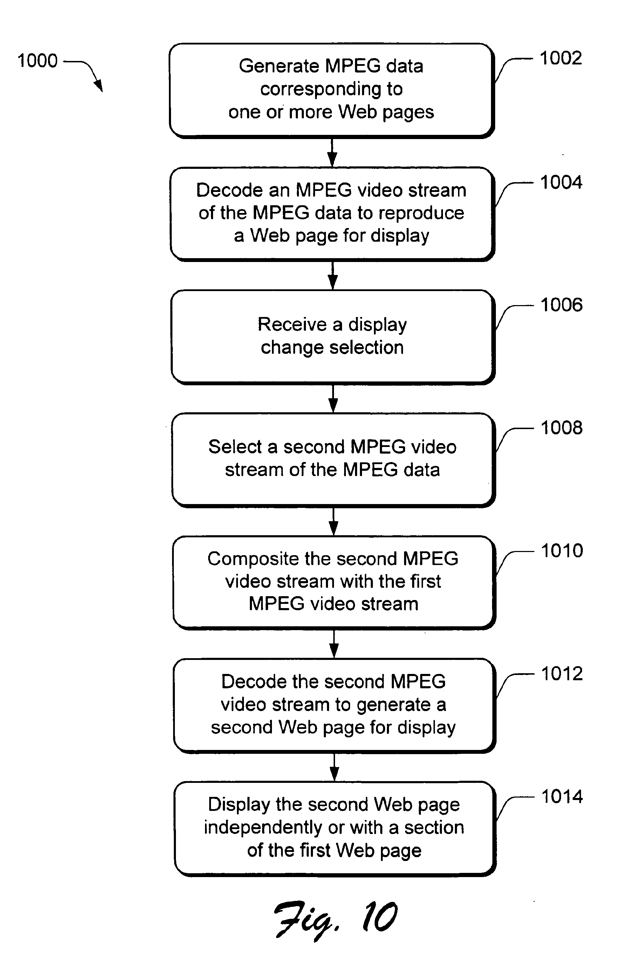

Fig. 10 illustrates a method 1000 to reproduce one or more Web pages with MPEG data and with the techniques described herein to composite MPEG video streams. The order in which the method is described is not intended to be construed as a limitation, and any number of the described method blocks can be combined in any order to implement the method. Furthermore, the method can be implemented in any suitable hardware, software, firmware, or combination thereof.

At block 1002, MPEG data is generated that corresponds to one or more Web pages. For one example, the MPEG data can be generated by capturing the contents of a Web browser displayed on-screen as a bitmap and encoding the contents as a single MPEG I-frame. Further, the MPEG data can be generated by capturing the off-screen contents of the Web browser.

At block 1004, an MPEG video stream of the MPEG data is decoded to reproduce a Web page for display. For example, MPEG decoder 106 (Fig. 1) receives a broadcast channel 120 that includes MPEG video streams 118. The MPEG video streams each include MPEG data generated from Web pages.

At block 1006, a display change selection is received. For example, the display change selection can be initiated as a selectable control input with an on-screen display selectable control 712 (Fig. 7) displayed over the Web page 710. At block 1008, a second MPEG video stream of the MPEG data is selected. For example, transport demultiplexer 104 (Fig. 1) selects a next MPEG video stream 718 (Fig. 7) in response to the display change selection.

At block 1010, the second MPEG video stream is composited with the first MPEG video stream. For example, transport demultiplexer 104 (Fig. 1) selects the next MPEG video stream 718 (Fig. 7) and continues communicating the MPEG data to MPEG decoder 106. The MPEG decoder 106 receives the composited MPEG video stream (i.e., video stream 708 and then video stream 718) just as if the MPEG decoder 106 were receiving one valid MPEG video stream.

At block 1012, the second MPEG video stream is decoded to generate a second Web page for display. For example, a second Web page 714 (Fig. 7) is generated for display when selectable control 712 is selected on the first Web page 710. Alternatively, the second MPEG video stream can be decoded to generate a video for display within the first Web page, as illustrated in Fig. 4.

At block 1014, the second Web page is displayed. For example, the second Web page 714 (Fig. 7) can be rendered to replace the first Web page 710, or the second Web page can be displayed with at least a section of the first Web page as shown in the example display 724.

### Exemplary Client Device in a Television-based System

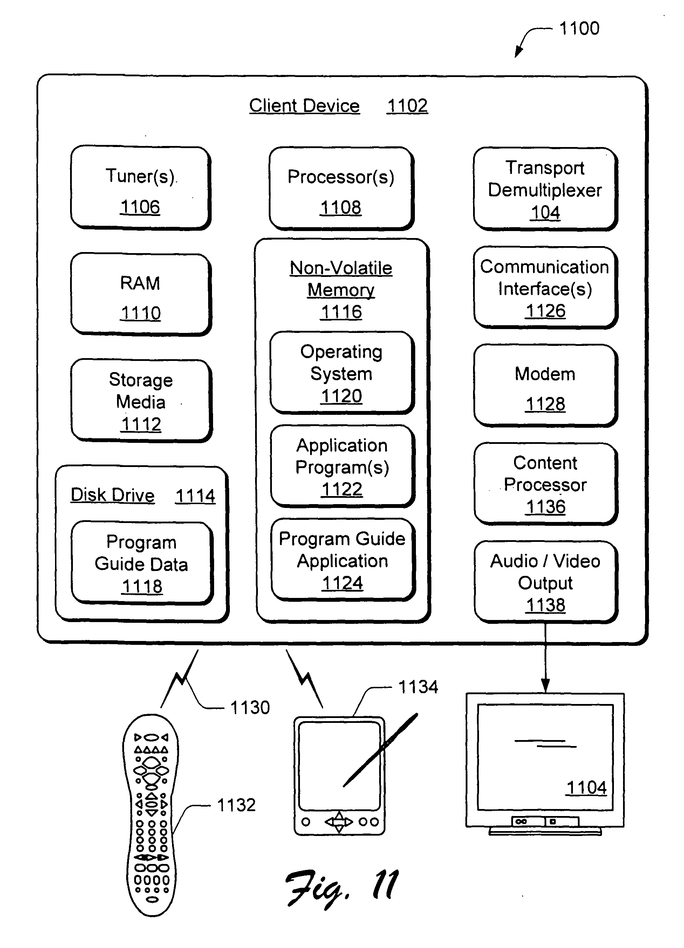

Fig. 11 illustrates a television-based system 1100 that includes an exemplary client device 1102 which includes components to implement compositing MPEG video streams for combined image display, such as the exemplary processing system 100 (Fig. 1) to include the transport demultiplexer 104 and the MPEG decoder 106. System 1100 also includes a display device 1104 to display static images, Web pages, videos, and the like that are generated for display. Client device 1102 can be implemented as a set-top box, a satellite receiver, a TV recorder with a hard disk, a digital video recorder (DVR) and playback system, a personal video recorder (PVR) and playback system, a game console, an information appliance, and as any number of similar embodiments.

Client device 1102 includes one or more tuners 1106 which are representative of one or more in-band tuners that tune to various frequencies or channels to receive MPEG broadcast channels and television signals. The tuners 1106 are also representative of an out-of-band tuner that tunes to the broadcast channel over which program data is broadcast to client device 1102. Client device 1102 includes one or more processors 1108 (e.g., microprocessors) which process various instructions to control the operation of client device 1102 and to communicate with other electronic and computing devices.

Client device 1102 can be implemented with one or more memory components, examples of which include a random access memory (RAM) 1110, mass storage media 1112, a disk drive 1114, and a non-volatile memory 1116 (e.g., ROM, Flash, EPROM, EEPROM, etc.). The one or more memory components store various information and/or data such as received content, program guide data 1118, configuration information for client device 1102, and/or graphical user interface information.

Alternative implementations of client device 1102 can include a range of processing and memory capabilities, and may include any number and different memory components than those illustrated in Fig. 11. For example, full-resource clients can be implemented with substantial memory and processing resources, including the disk drive 1114. Low-resource clients, however, may have limited processing and memory capabilities, such as a single tuner, a limited amount of RAM 1110, and limited processing capabilities of a processor 1108.

An operating system 1120 and one or more application programs 1122 can be stored in non-volatile memory 1116 and executed on a processor 1108 to provide a runtime environment. A runtime environment facilitates extensibility of client device 1102 by allowing various interfaces to be defined that, in turn, allow application programs 1122 to interact with client device 1102. The application programs 1122 can include a browser to browse the Web (e.g., "World Wide Web"), an email program to facilitate electronic mail, and any number of other application programs.

A program guide application 1124 is implemented to process program guide data 1118 and generate a program guide for display. Program guide application 1124 utilizes the program guide data and enables a television viewer to navigate through an onscreen program guide and locate programs, video on-demand movies, interactive game selections, and other media access information or content of interest to the viewer. With program guide application 1124, the television viewer can look at schedules of past, current, and future programming, set reminders for upcoming programs, and/or enter instructions to record one or more television shows or video on-demand movies.

The program guide application 1124 can be implemented as a software component that executes on a processor 1108 and is stored in non-volatile memory 1116 in client device 1102. Although program guide application 1124 is illustrated and described as a single application configured to perform several functions of a program guide for previous program broadcasts, the program guide application 1124 can be implemented as several component applications distributed to each perform one or more functions in a computing device, a set-top box, a digital video recorder system, a personal video recorder system, and/or any other television-based entertainment and information system.

Client device 1102 further includes one or more communication interfaces 1126 and a PSTN, DSL, or cable modem 1128. A communication interface 1126 can be implemented as a serial and/or parallel interface, as a wireless interface, and/or as any other type of network interface. A wireless interface enables client device 1102 to receive control input commands 1130 and other information from a user-operated input device, such as from a remote control device 1132 or from another infrared (IR), 802.11, Bluetooth, or similar RF input device. Input devices can include a wireless keyboard or another handheld input device 1134 such as a personal digital assistant (PDA), handheld computer, wireless phone, or the like. A network interface and a serial and/or parallel interface enables client device 1102 to interact and communicate with other electronic and computing devices via various communication links. Modem 1128 facilitates client device 1102 communication with other electronic and computing devices via a conventional telephone line, a DSL connection, or a cable modem.

Client device 1102 also includes a content processor 1136 which can include a video decoder and/or additional processors to receive, process, and decode broadcast video signals and program data, such as NTSC, PAL, SECAM, or other television system analog video signals, as well as DVB, ATSC, or other television system digital video signals. For example, content processor 1136 can include an MPEG-2 or MPEG-4 (Moving Pictures Experts Group) decoder that decodes MPEG-encoded video content, such as MPEG decoder 106 (Fig. 1). The systems described herein can be implemented for any type of video encoding format as well as for data and/or content streams that are not encoded.

Typically, video content and program data includes video data and corresponding audio data. Content processor 1136 generates video and/or display content that is formatted for display on display device 1104, and generates decoded audio data that is formatted for broadcast by a broadcast device, such as one or more speakers (not shown) in display device 1104. Content processor 1136 can include a display controller (not shown) that processes the video and/or display content to display corresponding images on display device 1104. A display controller can include a microcontroller, integrated circuit, and/or similar video processing component to process the images.

Client device 1102 also includes an audio and/or video output 1138 that provides the audio, video, and/or display signals to television 1104 or to other devices that process and/or display, or otherwise render, the audio and video data. Video signals and audio signals can be communicated from client device 1102 to television 1104 via an RF (radio frequency) link, S-video link, composite video link, component video link, or other similar communication link.

Although shown separately, some of the components of client device 1102 may be implemented in an application specific integrated circuit (ASIC). Additionally, a system bus (not shown) typically connects the various components within client device 1102. A system bus can be implemented as one or more of any of several types of bus structures, including a memory bus or memory controller, a peripheral bus, an accelerated graphics port, or a local bus using any of a variety of bus architectures. By way of example, such architectures can include an Industry Standard Architecture (ISA) bus, a Micro Channel Architecture (MCA) bus, an Enhanced ISA (EISA) bus, a Video Electronics Standards Association (VESA) local bus, and a Peripheral Component Interconnects (PCI) bus also known as a Mezzanine bus.

### Exemplary System Architecture

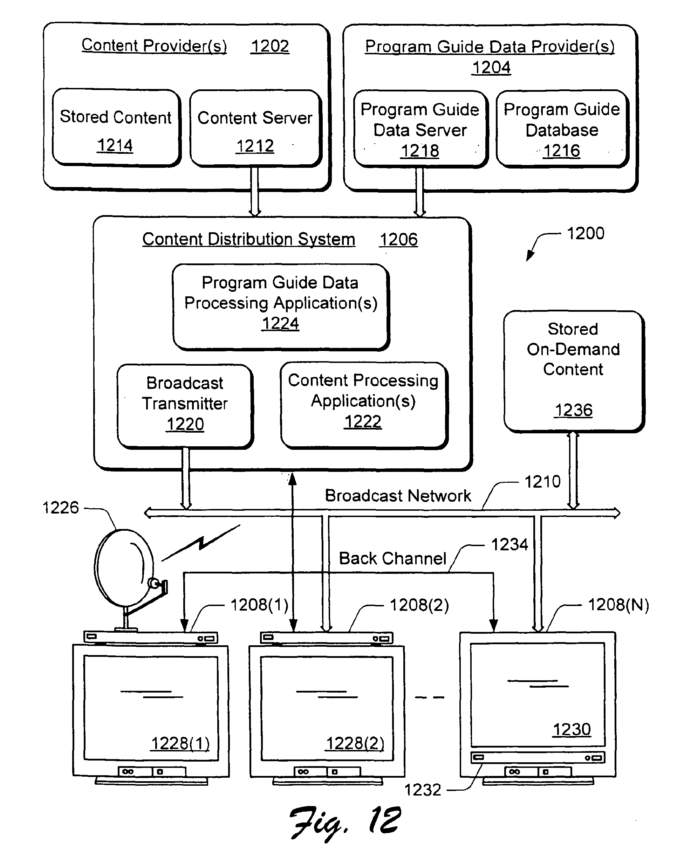

Fig. 12 illustrates an exemplary system architecture 1200 in which compositing MPEG video streams for combined image display can be implemented. System 1200 facilitates distribution of content and program guide data to multiple viewers. The system 1200 includes one or more content providers 1202, one or more program guide data providers 1204, a content distribution system 1206, and multiple client devices 1208(1), 1208(2), ..., 1208(N) coupled to the content distribution system 1206 via a broadcast network 1210.

A content provider 1202 includes a content server 1212 to control distribution of stored content 1214, such as the MPEG data, movies, television programs, commercials, music, and similar audio and/or video content from content provider 1202 to the content distribution system 1206. Additionally, content server 1212 controls distribution of live content (e.g., content that was not previously stored, such as live feeds) and/or content stored at other locations to the content distribution system 1206. A program guide data provider 1204 includes a program guide database 1216 and a program guide data server 1218. The program guide database 1216 stores electronic files of program guide data which is used to generate an electronic or interactive program guide (or, "program guide").

The program guide data server 1218 processes the program guide data prior to distribution to generate a published version of the program guide data which can contain programming information for all broadcast channels and on-demand content listings for one or more days. The processing may involve any number of techniques to reduce, modify, or enhance the program data such as data compression, format modification, and the like. The program guide data server 1218 controls distribution of the published version of the program guide data from a program guide data provider 1204 to the content distribution system 1206 using, for example, a file transfer protocol (FTP) over a TCP/IP network (e.g., Internet or Intranet). Further, the published version of the program guide data can be transmitted from program data provider 1204 via a satellite and the content distribution system 1206 directly to a client device 1208.

Content distribution system 1206 is representative of a headend service and/or program data center 102 (Fig. 1) that provides program guide data, as well as content, to multiple subscribers (e.g., client devices 1208). Each content distribution system 1206 may receive a different version of the program guide data that takes into account different programming preferences and lineups. The program guide data server 1218 can create different versions of the program guide data that includes those channels of relevance to respective headend services, and the content distribution system 1206 transmits the program guide data to the multiple client devices 1208. In one implementation, for example, content distribution system 1206 utilizes a carousel file system to repeatedly broadcast the program guide data over an out-of-band (OOB) channel to the client devices 1208. Alternatively, the multiple client devices 1208 can receive standard, or uniform, program guide data and individually determine which program guide data to display based on the associated headend service.

Content distribution system 1206 includes a broadcast transmitter 1220, one or more content processing applications 1222, and one or more program guide data processing applications 1224. Broadcast transmitter 1220 broadcasts signals, such as cable television signals, across broadcast network 1210. Broadcast network 1210 can include a cable television network, RF, microwave, satellite, and/or data network, such as the Internet, and may also include wired or wireless transmission media using any broadcast format or broadcast protocol. Additionally, broadcast network 1210 can be any type of network, using any type of network topology and any network communication protocol, and can be represented or otherwise implemented as a combination of two or more networks.

A content processing application 1222 processes the content received from a content provider 1202 prior to transmitting the content across broadcast network 1210. Similarly, a program guide data processing application 1224 processes the program guide data received from a program guide data provider 1204 prior to transmitting the program guide data across broadcast network 1210. A particular content processing application 1222 may encode, or otherwise process, the received content into a format that is understood by the multiple client devices 108 which are coupled to broadcast network 1210. Although Fig. 12 shows a single content provider 1202, a single program guide data provider 1204, and a single content distribution system 1206, exemplary system 1200 can include any number of content providers and/or program guide data providers coupled to any number of content distribution systems.

Client devices 1208 can be implemented in a number of ways. For example, a client device 1208(1) receives broadcast content from a satellite-based transmitter via a satellite dish 1226. Client device 1208(1) is also referred to as a set-top box or a satellite receiving device. Client device 1208(1) is coupled to a television 1228(1) for presenting the content received by the client device (e.g., audio data and video data), as well as a graphical user interface. A particular client device 1208 can be coupled to any number of televisions 1228 and/or similar devices that can be implemented to display or otherwise render content. Similarly, any number of client devices 1208 can be coupled to a single television 1228.

Client device 1208(2) is also coupled to receive broadcast content from broadcast network 1210 and provide the received content to associated television 1228(2). Client device 1208(N) is an example of a combination television 1230 and integrated set-top box 1232. In this example, the various components and functionality of the set-top box are integrated into the television, rather than using two separate devices. The set-top box integrated into the television can receive broadcast signals via a satellite dish (similar to satellite dish 1226) and/or via broadcast network 1210. In alternate implementations, client devices 1208 may receive broadcast signals via the Internet or any other broadcast medium, such as back channel 1234 which can be implemented as a Internet protocol (IP) connection or as other protocol connections using a modem connection and conventional telephone line, for example. Further, back channel 1234 provides an alternate communication link between each of the client devices 1208, and between the client devices 1208 and the content distribution system 1206.

The exemplary system 100 also includes stored on-demand content 1236, such as Video On-Demand (VOD) movie content. The stored on-demand content 1236 can be viewed with a television 1228 via a client device 1208 through an onscreen movie guide, for example, and a viewer can enter instructions to stream a particular movie, or other stored content, to a corresponding client device 1208.

### Conclusion

Although the invention has been described in language specific to structural features and/or methods, it is to be understood that the invention defined in the appended claims is not necessarily limited to the specific features or methods described. Rather, the specific features and methods are disclosed as preferred forms of implementing the claimed invention.

The following is a list of further preferred embodiments of the invention:
Embodiment 1. One or more computer-readable media comprising computer-executable instructions that, when executed, direct a client device in a television-based system to perform the method of the invention.
Embodiment 2. One or more computer-readable media comprising computer-executable instructions that, when executed, direct a digital video recorder to perform the method of the invention.
Embodiment 3. One or more computer-readable media comprising computer-executable instructions that, when executed, direct a client device to:
   generate a first image for display from MPEG data received in a first MPEG video stream;
   composite the first MPEG video stream with a second MPEG video stream; and
   generate a second image for display from additional MPEG data received in the second MPEG video stream such that the second image is combined for display with at least a section of the first image.
Embodiment 4. One or more computer-readable media as recited in embodiment 3, further comprising computer-executable instructions that, when executed, direct the client device to receive a display change selection initiated as a selectable control input with an on-screen display selectable control displayed over the first image.
Embodiment 5. One or more computer-readable media as recited in embodiment 3, further comprising computer-executable instructions that, when executed, direct the client device to:
   generate a first static page as the first image for display; and
   generate a second static page as the second image for combined display with at least a section of the first static page.
Embodiment 6. One or more computer-readable media as recited in embodiment 3, further comprising computer-executable instructions that, when executed, direct the client device to:
   generate a static page as the first image for display; and
   generate a video as the second image for combined display with at least a section of the static page.
Embodiment 7. One or more computer-readable media as recited in embodiment 3, further comprising computer-executable instructions that, when executed, direct the client device to:
   generate a first Web page from the MPEG data as the first image for display; and
   generate a second Web page from the additional MPEG data as the second image for combined display with at least a section of the first Web page.
Embodiment 8. One or more computer-readable media as recited in embodiment 3, further comprising computer-executable instructions that, when executed, direct the client device to generate a single display that includes the first image and the second image being displayed concurrently.
Embodiment 9. One or more computer-readable media as recited in embodiment 3, further comprising computer-executable instructions that, when executed, direct the client device to generate a single display that includes the second image being displayed within the first image.
Embodiment 10. One or more computer-readable media as recited in embodiment 3, further comprising computer-executable instructions that, when executed, direct the client device to generate a single display that includes the second image being displayed as a video within the first image.
Embodiment 11. One or more computer-readable media as recited in embodiment 3, further comprising computer-executable instructions that, when executed, direct the client device to:
   generate a static page as the first image for display;
   generate a video as the second image for display; and
   generate a single display that includes the video being displayed within the static page.
Embodiment 12. One or more computer-readable media as recited in embodiment 3, further comprising computer-executable instructions that, when executed, direct the client device to:
   maintain a current MPEG video stream identifier corresponding to the first MPEG video stream;
   store a next MPEG video stream identifier corresponding to the second MPEG video stream;
   monitor the second MPEG video stream for a splice point; and
   select the second MPEG video stream at the splice point.
Embodiment 13. One or more computer-readable media as recited in embodiment 3, further comprising computer-executable instructions that, when executed, direct the client device to:
   composite the second MPEG video stream with at least a third MPEG video stream; and
   generate a third image for display such that the third image is combined for display with the second image and with at least a second section of the first image.
Embodiment 14. A method, comprising:
   generating MPEG data corresponding to one or more Web pages; and
   decoding an MPEG video stream of the MPEG data to reproduce a Web page for display.
Embodiment 15. A method as recited in embodiment 14, further comprising:
   selecting at least a second MPEG video stream of the MPEG data; and
   decoding the second MPEG video stream to generate at least a second Web page for display.
Embodiment 16. A method as recited in embodiment 14, further comprising:
   receiving a display change selection initiated as a selectable control input with an on-screen display selectable control displayed over the Web page.
   selecting a second MPEG video stream of the MPEG data; and
   decoding the second MPEG video stream to generate a second Web page for display, the second Web page corresponding to the display change selection.
Embodiment 17. A method as recited in embodiment 14, further comprising:
   compositing a second MPEG video stream of the MPEG data with the MPEG video stream; and
   decoding the second MPEG video stream to generate a second Web page for display such that the second Web page is displayed with at least a section of the Web page.
Embodiment 18. A method as recited in embodiment 14, further comprising:
   compositing a second MPEG video stream of the MPEG data with the MPEG video stream; and
   decoding the second MPEG video stream to generate a second Web page for display such that the second Web page is displayed concurrently with the Web page.
Embodiment 19. A method as recited in embodiment 14, further comprising:
   compositing a second MPEG video stream with the MPEG video stream; and
   decoding the second MPEG video stream to generate a video for display within the Web page.
Embodiment 20. A method as recited in embodiment 14, wherein generating the MPEG data includes capturing the on-screen contents of a Web browser.
Embodiment 21. A method as recited in embodiment 14, wherein generating the MPEG data includes capturing the off-screen contents of a Web browser.
Embodiment 22. One or more computer-readable media comprising computer-executable instructions that, when executed, direct a client device in a television-based system to perform the method of embodiment 14.
Embodiment 23. One or more computer-readable media comprising computer-executable instructions that, when executed, direct a digital video recorder to perform the method of embodiment 14.
Embodiment 24. One or more computer-readable media comprising computer-executable instructions that, when executed, direct a client device to:
   generate MPEG data corresponding to one or more Web pages; and
   decode an MPEG video stream of the MPEG data to reproduce a Web page for display.
Embodiment 25. One or more computer-readable media as recited in embodiment 24, further comprising computer-executable instructions that, when executed, direct the client device to:
   select at least a second MPEG video stream of the MPEG data; and
   decode the second MPEG video stream to generate at least a second Web page for display.
Embodiment 26. One or more computer-readable media as recited in embodiment 24, further comprising computer-executable instructions that, when executed, direct the client device to:
   composite a second MPEG video stream of the MPEG data with the MPEG video stream; and
   decode the second MPEG video stream to generate a second Web page for display such that the second Web page is displayed with at least a section of the Web page.
Embodiment 27. One or more computer-readable media as recited in embodiment 24, further comprising computer-executable instructions that, when executed, direct the client device to:
   composite a second MPEG video stream of the MPEG data with the MPEG video stream; and
   decode the second MPEG video stream to generate a second Web page for display such that the second Web page is displayed concurrently with the Web page.
Embodiment 28. One or more computer-readable media as recited in embodiment 24, further comprising computer-executable instructions that, when executed, direct the client device to:
   composite a second MPEG video stream with the MPEG video stream; and
   decode the second MPEG video stream to generate a video for display within the Web page.
Embodiment 29. One or more computer-readable media as recited in embodiment 24, further comprising computer-executable instructions that, when executed, direct the client device to generate the MPEG data by capturing the contents of a Web browser.
Embodiment 30. A client device in a television-based system comprising a system having an application program according to the invention.
Embodiment 31. A digital video recorder comprising a system having an application program according to the invention.

## Claims

1. A client device, comprising:
a transport demultiplexer configured to select a first MPEG video stream from a broadcast channel and further configured to select a second MPEG video stream from the broadcast channel; and
a decoder configured to decode the first MPEG video stream to generate a first image for display and decode the second MPEG video stream to generate a second image for display such that the second image is combined for display with at least a section of the first image.

2. A client device as recited in claim 1, further comprising a tuner configured to receive the broadcast channel of multiple MPEG video streams which includes at least the first MPEG video stream and the second MPEG video stream.

3. A client device as recited in claim 1, wherein:
the decoder decodes the first MPEG video stream to generate a first static page as the first image for display; and
the decoder decodes the second MPEG video stream to generate a second static page as the second image for combined display with at least a section of the first static page.

4. A client device as recited in claim 1, wherein:
the decoder decodes the first MPEG video stream to generate a static page as the first image for display; and
the decoder decodes the second MPEG video stream to generate a video as the second image for combined display with at least a section of the static page.

5. A client device as recited in claim 1, wherein:
the decoder decodes the first MPEG video stream to generate a reproduction of a first Web page as the first image for display;
the transport demultiplexer selects the second MPEG video stream in response to a display change selection initiated as a selectable control input with an on-screen display selectable control displayed over the first Web page; and
the decoder decodes the second MPEG video stream to generate a reproduction of a second Web page as the second image for combined display with at least a section of the first Web page.

6. A client device as recited in claim 1, wherein the second image and the section of the first image are displayed concurrently.

7. A client device as recited in claim 1, wherein the first image and the second image are displayed concurrently.

8. A client device as recited in claim 1, wherein the first image and the second image are displayed concurrently and side-by-side.

9. A client device as recited in claim 1, wherein:
the decoder decodes the first MPEG video stream to generate a first static page as the first image for display;
the decoder decodes the second MPEG video stream to generate a second static page as the second image for display; and
the second static page and at least a section of the first static page are displayed concurrently.

10. A client device as recited in claim 1, wherein the second image and the section of the first image are displayed concurrently, the second image being displayed within the first image.

11. A client device as recited in claim 1, wherein the second image and the section of the first image are displayed concurrently, the second image being displayed as a video within the first image.

12. A client device as recited in claim 1, wherein:
the decoder decodes the first MPEG video stream to generate a static page as the first image for display;
the decoder decodes the second MPEG video stream to generate a video as the second image for display; and
the video and at least a section of the static page are displayed concurrently, the video being displayed within the static page.

13. A client device as recited in claim 1, wherein:
the decoder decodes the first MPEG video stream to generate a static page as the first image for display;
the transport demultiplexer selects the second MPEG video stream in response to a display change selection initiated as a selectable control input with an on-screen display selectable control displayed over the static page;
the decoder decodes the second MPEG video stream to generate a video as the second image for display; and
the video and at least a section of the static page are displayed concurrently, the video being displayed within the static page.

14. A client device as recited in claim 1, wherein the transport demultiplexer is further configured to:
maintain a current MPEG video stream identifier corresponding to the first MPEG video stream;
maintain a next MPEG video stream identifier corresponding to the second MPEG video stream; and
store the next MPEG video stream identifier before the transport demultiplexer selects the second MPEG video stream.

15. A client device as recited in claim 1, wherein the transport demultiplexer is further configured to:
maintain a current packet identifier corresponding to data packets in the first MPEG video stream;
maintain a next packet identifier corresponding to additional data packets in the second MPEG video stream; and
store the next packet identifier before the transport demultiplexer selects the second MPEG video stream.

16. A client device as recited in claim 1, wherein the transport demultiplexer selects the second MPEG video stream at a splice point in the second MPEG video stream.

17. A client device as recited in claim 1, wherein the transport demultiplexer is further configured to monitor the second MPEG video stream for a splice point when a display change selection is received, and is further configured to select the second MPEG video stream at the splice point.

18. A client device as recited in claim 1, wherein the transport demultiplexer is further configured to maintain a current MPEG video stream identifier corresponding to the first MPEG video stream, and when a display change selection is received:
store a next MPEG video stream identifier corresponding to the second MPEG video stream;
monitor the second MPEG video stream for a splice point; and
select the second MPEG video stream at the splice point.

19. A client device as recited in claim 1, wherein:
the transport demultiplexer is further configured to select at least a third MPEG video stream from the broadcast channel; and
the decoder is further configured to decode at least the third MPEG video stream to generate a third image for display such that the third image is combined for display with the second image and with at least a second section of the first image.

20. A digital video recorder comprising the client device as recited in claim 1.

21. A television-based system comprising the client device as recited in claim 1.

22. A method, comprising:
decoding a first MPEG video stream to generate a first image for display;
selecting a second MPEG video stream;
compositing the second MPEG video stream with the first MPEG video stream; and
decoding the second MPEG video stream to generate a second image for display such that the second image is combined for display with at least a section of the first image.

23. A method as recited in claim 22, further comprising receiving multiple MPEG video streams in a broadcast channel, the multiple MPEG video streams including at least the first MPEG video stream and the second MPEG video stream.

24. A method as recited in claim 22, further comprising receiving a display change selection, and wherein selecting includes selecting the second MPEG video stream in response to receiving the display change selection.

25. A method as recited in claim 22, further comprising receiving a display change selection initiated as a selectable control input with an on-screen display selectable control displayed over the first image.

26. A method as recited in claim 22, wherein:
decoding the first MPEG video stream includes generating a first static page as the first image for display; and
decoding the second MPEG video stream includes generating a second static page as the second image for combined display with at least a section of the first static page.

27. A method as recited in claim 22, wherein:
decoding the first MPEG video stream includes generating a static page as the first image for display; and
decoding the second MPEG video stream includes generating a video as the second image for display.

28. A method as recited in claim 22, wherein:
decoding the first MPEG video stream includes generating a first Web page as the first image for display, the first Web page being generated from MPEG data in the first MPEG video stream; and
decoding the second MPEG video stream includes generating a second Web page as the second image for display, the second Web page being generated from additional MPEG data in the second MPEG video stream.

29. A method as recited in claim 22, wherein the second image and the section of the first image are displayed concurrently.

30. A method as recited in claim 22, wherein the first image and the second image are displayed concurrently.

31. A method as recited in claim 22, wherein the first image and the second image are displayed concurrently and side-by-side.

32. A method as recited in claim 22, wherein:
decoding the first MPEG video stream includes generating a first static page as the first image for display;
decoding the second MPEG video stream includes generating a second static page as the second image for display; and
the second static page and at least a section of the first static page are displayed concurrently.

33. A method as recited in claim 22, wherein the second image is displayed within the first image.

34. A method as recited in claim 22, wherein the second image is displayed as a video within the first image.

35. A method as recited in claim 22, wherein:
decoding the first MPEG video stream includes generating a static page as the first image for display;
decoding the second MPEG video stream includes generating a video as the second image for display; and
the video is displayed within the static page.

36. A method as recited in claim 22, further comprising:
maintaining a current MPEG video stream identifier corresponding to the first MPEG video stream;
storing a next MPEG video stream identifier corresponding to the second MPEG video stream before selecting the second MPEG video stream.

37. A method as recited in claim 22, further comprising:
maintaining a current packet identifier corresponding to data packets in the first MPEG video stream;
storing a next packet identifier corresponding to additional data packets in the second MPEG video stream before selecting the second MPEG video stream.

38. A method as recited in claim 22, wherein selecting includes selecting the second MPEG video stream at a splice point in the second MPEG video stream.

39. A method as recited in claim 22, further comprising monitoring the second MPEG video stream for a splice point, and wherein selecting includes selecting the second MPEG video stream at the splice point.

40. A method as recited in claim 22, further comprising:
maintaining a current MPEG video stream identifier corresponding to the first MPEG video stream;
storing a next MPEG video stream identifier corresponding to the second MPEG video stream; and
monitoring the second MPEG video stream for a splice point, wherein selecting includes selecting the second MPEG video stream at the splice point.

41. A method as recited in claim 22, further comprising:
maintaining a current MPEG video stream identifier corresponding to the first MPEG video stream;
storing a next MPEG video stream identifier corresponding to the second MPEG video stream when a display change selection is received; and
monitoring the second MPEG video stream for a splice point, wherein selecting includes selecting the second MPEG video stream at the splice point.

42. A method as recited in claim 22, further comprising:
selecting at least a third MPEG video stream;
compositing the third MPEG video stream with the second MPEG video stream; and
decoding the third MPEG video stream to generate a third image for display such that the third image is combined for display with the second image and with at least a second section of the first image.

43. A client device as recited in claim 1, further comprising:
an application program configured to receive MPEG data that includes I-frames and P-frames corresponding to a video, and further configured to generate the first MPEG video stream that includes the P-frames and independent P_{I}-frames corresponding to the video, the independent P_{I}-frames being generated from at least one of the I-frames and the P-frames included in the MPEG data.

44. A client device as recited in claim 43, configured to:
decode a second MPEG video stream to generate an image for display;
composite the MPEG video stream with the second MPEG video stream; and
generate a single display that includes the video being displayed within the image.

45. A client device as recited in claim 43, wherein, to generate an independent P_{I}-frame, the application program is further configured to:
generate slices of null macroblocks to represent a region that does not include pixel data corresponding to the video; and
re-encode slice data start codes for slices of macroblocks that include the pixel data corresponding to the video.

46. A client device as recited in claim 43, wherein, to generate an independent P_{I}-frame from an MPEG P-frame, the application program is further configured to:
generate slices of null macroblocks to represent a region that does not include pixel data corresponding to the video; and
re-encode slice data start codes for slices of macroblocks that include the pixel data corresponding to the video.

47. A client device as recited in claim 43, wherein, to generate an independent P_{I}-frame, the application program is further configured to:
generate slices of null macroblocks to represent a region that does not include pixel data corresponding to the video; and
re-encode the first discrete cosine coefficient in blocks that include the pixel data corresponding to the video.

48. A client device as recited in claim 43, wherein, to generate an independent P_{I}-frame from an MPEG I-frame, the application program is further configured to:
generate slices of null macroblocks to represent a region that does not include pixel data corresponding to the video; and
re-encode the first discrete cosine coefficient in blocks that include the pixel data corresponding to the video.

49. A method as recited in claim 22, comprising:
receiving MPEG data that includes I-frames and P-frames corresponding to a video;
generating independent P_{I}-frames from the MPEG data; and
generating the first MPEG video stream that includes the P-frames and independent P_{I}-frames corresponding to the video.

50. A method as recited in claim 49, further comprising decoding the MPEG video stream to generate the video for display.

51. A method as recited in claim 49, further comprising:
decoding the first MPEG video stream to generate the video for display;
decoding the second MPEG video stream to generate an image for display;
compositing the first MPEG video stream with the second MPEG video stream; and
generating a single display that includes the video being displayed within the image.

52. A method as recited in claim 49, wherein generating independent P_{I}-frames includes:
generating slices of null macroblocks to represent a region that does not include pixel data corresponding to the video; and
re-encoding slice data start codes for slices of macroblocks that include the pixel data corresponding to the video.

53. A method as recited in claim 49, wherein generating independent P_{I}-frames includes:
generating slices of null macroblocks to represent a region that does not include pixel data corresponding to the video; and
re-encoding the first discrete cosine coefficient in blocks that include the pixel data corresponding to the video.
